# EUROPEAN PATENT APPLICATION

(11) **EP 2 860 629 A1**
(43) Date of publication of application: **15.04.2015**
(21) Application number: 13360033.8
(22) Date of filing: 10.10.2013
(51) Int. Cl.: G06F 9/50, H04L 12/701

(54) **Method, processing framework, aggregator and computer program product for processing data**

(71) Applicant: ALCATEL LUCENT, 92100 Boulogne-Billancourt (FR)
(72) Inventor: Cucinotta, Tommaso, 15 Dublin (IE); Bedini, Ivan, Dublin 15 (IE)
(74) Representative: Greenwood, Matthew David

(57) **Abstract**

A computer-implemented method for processing data in a distributed processing platform, comprising receiving input data from a source node in a computational topology of the platform including multiple nodes comprising processing logic linked using pathways between nodes thereby to define multiple computational alternatives for the topology, processing the input data to determine a semantic concept associated with at least a portion of the input data, routing the input data using one or more ontology-based matching rules relating pathways between nodes of the topology to a destination node selected on the basis of the or each rule and the semantic concept.

## Description

### TECHNICAL FIELD

The present invention relates to the processing of data in a distributed processing platform or framework, and more particularly, although not exclusively, to the routing of data in a computational topology.

### BACKGROUND

Distributed platform systems can provide functionality to enable the acquisition, processing and distribution of data using processing nodes of the platform. Typically, a flow of the data can be formally represented as a Direct Acyclic Graph (DAG), representing a set of connected tasks or nodes, often referred to as a topology.

Systems can be designed for batch or real-time processing of data, and source data items can be formatted as tuples in the form of, for example, a key/value pair data structure. This data structure is powerful for large data set analysis because it allows simple and direct recognition of the tuple itself, and the key can be useful as the basis for the identification of the next processing node in a computational topology. That is, routing and distribution of data items across a distributed processing platform is typically based on the specific value of the key part of a data item such that distributed processing systems, independently of the use (batch or streamed), execute data routing according to a key of a tuple for a data item. For example, predefined exact key matching can be used, or alternative strategies such as round-robin routing among all possible destinations can be implemented.

### SUMMARY

According to an example, there is provided a computer-implemented method for processing data in a distributed processing platform, comprising receiving input data from a source node in a computational topology of the platform including multiple nodes comprising processing logic linked using pathways between nodes thereby to define multiple computational alternatives for the topology, processing the input data to determine a semantic concept associated with at least a portion of the input data, routing the input data using one or more ontology-based matching rules relating pathways between nodes of the topology to a destination node selected on the basis of the or each rule and the semantic concept. The input data can be routed to multiple destination nodes. An additional node can be instantiated in the topology relating to a specific computational task. The input data can be modified using the semantic concept. For example, the input data can be modified by adapting, replacing or augmenting the input data using data representing the determined semantic concept. Load balancing can be performed in the platform by distributing input data according to the one or more ontology-based matching rules to multiple destination nodes at a predefined rate. The input data can be a tuple including a key and an associated value, and wherein the semantic concept is determined using the key.

According to an example, there is provided a distributed processing framework, comprising multiple nodes including processing logic, multiple interconnects linking the nodes to form a computational topology, and a semantic aggregator to process data from respective ones of the multiple nodes and determine a semantic concept associated with at least a portion of the data, the framework operable to route the data using one or more ontology-based matching rules relating to the interconnects between nodes to a destination node selected on the basis of the or each rule and the semantic concept. The framework can be further operable to modify the data using the semantic concept, and to route the data to multiple destination nodes. The framework can load balance the distribution of data by routing the data to the multiple destination nodes at a predefined rate thereby to avoid overloading a specific node of the framework.

According to an example, there is provided a semantic aggregator to process data to be routed in a distributed processing platform comprising multiple nodes comprising processing logic linked using pathways between nodes thereby to define multiple computational alternatives for the topology in order to determine a semantic concept associated with at least a portion of the data. The semantic aggregator can provide the semantic concept for the framework thereby to enable routing of the data using one or more ontology-based matching rules relating pathways between nodes of the topology to a destination node selected on the basis of the or each rule and the semantic concept. The semantic aggregator can receive, as the data, a tuple in the form a key/value pair, and to process the key to determine the semantic concept.

According to an example, there is provided a processing node of a distributed processing framework, comprising processing logic, respective connections to multiple other nodes of the framework and a semantic aggregator, the node operable to receive input data, output data to the semantic aggregator, receive modified data from the semantic aggregator, and transmit the modified data to at least one of the multiple nodes using one or more ontology-based matching rules relating the connections between the node and the multiple other nodes on the basis of the or each rule and a semantic concept used to generate the modified data.

According to an example, there is provided a computer program product, comprising a computer usable medium having computer readable program code embodied therein, said computer readable program code adapted to be executed to implement a method as provided above.

### BRIEF DESCRIPTION OF THE DRAWINGS

Embodiments will now be described, by way of example only, with reference to the accompanying drawings, in which:
Figure 1 is a schematic representation of a portion of a processing platform according to an example; and
Figure 2 is a schematic representation of a combination of physical nodes and multiple virtual nodes instantiated over physical hardware and linked using connections according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "cornprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Distributed processing platforms can be used to process text and messages exchanged and/or posted by users through various on-line web systems or cloud applications, such as social networks and so on. However, in the context of text processing, the functionality available in distributed data processing platforms for supporting data stream selection, distribution and routing decisions can be limited and error-prone as it is typically based on exact matches, such as exact matches based on key value in a key/value data structure.

According to an example, in a distributed data processing platform or framework, where instances of multiple (horizontally scalable) nodes can be arbitrarily interconnected to form a computational topology, load-balancing and routing of data among multiple instances of destination nodes is executed using ontology-based matching. Accordingly, a computational topology of the distributed processing platform includes multiple nodes comprising processing logic that are linked using pathways, interconnects or connections between nodes so as to define multiple computational alternatives for the topology. That is, data routed using a first pathway in the topology can be processed in a first way, whilst the same data routed through a second pathway in the topology can be processed in a second way, which can be different to the first and thus result in a different set of output data for the framework. A routing decision is an intelligent decision that is based on ontology-based matching rules that leverage a semantic concept associated with the data to be routed.

A domain conceptual model, such as an ontology definition, can be associated with one or more data streams being managed by the platform, as well as to individual data items being processed by the platform. Furthermore, a domain conceptual model definition can be associated to individual processing nodes or components of the platform, as well as to the individual data sources constituting a distributed data processing application.

According to an example, nodes are interconnected using predefined connections, and are horizontally scalable, so that each node can be instantiated multiple times, such as at run-time or at periods when increased processing is required for example. Correspondingly, the connections of each node with other nodes in the topology are horizontally scaled so as to connect each instance, potentially, with each other instance. Once a node emits a data item, the selection and routing of the data item to a destination node, among all the instances connected to the source component in the topology, is based on ontology-based matching rules that can be associated to the logical links interconnecting the nodes in the topology, as well as the components themselves, or more generally on concept-matching and/or semantic rules.

For example, an ontology-based load-balancing rule can associate different ontologic categories or concepts to different instances of nodes. Text segments (for example, a statement, output in the form of a tuple, for example) matching the same ontologic category(ies) or concepts can then be transmitted to the same instance of the destination node. Accordingly, compared to a legacy situation in which data is sent in a typically context-unaware fashion, the potentially ambiguous nature of some words, for example, can be dealt with, and thereby provide for an effective mechanism for load balancing across a framework of processing nodes. Seemingly similar data can therefore be sent to different nodes for further processing once it has been determined that the data relates to different semantic concepts for example.

In cases where multiple categories or concepts match a data item to be routed, a disambiguation mechanism can be used. For example, different categories can be associated with precedence order numbers, so that it is possible to identify a first-order matching category to be used to match a destination node. Alternatively, an ontologic definition itself can be recurred so as to better specify and disambiguate the different categories or concepts that can be used for routing decisions, and which ones have to take precedence over which other ones. Alternatively, it may be possible to consider the message as belonging to all of the identified categories or concepts that match, causing the message to be replicated multiple times, so as to be forwarded to multiple destination nodes, such as those responsible for handling the correspondingly identified categories.

Thus, ambiguous use of words as commonly arising in all languages can be accommodated. For example, a matching rule might specify that, when referring to a "ship" in the context of sea navigation, the data item(s) in question should be directed to a certain computational node of a topology, whilst when using the same word in the context of space missions and/or space navigation, or space fiction, the item(s) should be forwarded to a different node for example.

In an example, context-awareness during routing and processing of data items is realized through either static or dynamic attachment of data representing a semantic context to a data stream, such as the domain conceptual model that is currently in use. Nodes of the distributed data processing application can dynamically switch the semantic contexts associated to the various data item(s) being handled.

Note that, in one form of an embodiment, using classification of data items based on a synonym relationship applied to key string values, a matching process can be made relatively fast by creating a fast hash-map mapping the various possible incoming key strings into their corresponding matching ontologic category(ies), and/or main (first-order) category (such as in the case of prioritization among multiple matching categories as noted above for example).

A distributed processing platform according to an example can be realised as a modification to an existing distributed real-time data streaming platform, with a conceptual model adopted using an ontology definition expressed using, for example, the Ontology Web Language (OWL) formalism to code the logical rules aggregating semantic concepts. For example, an OWL ontology can be created for an application using the Protégé-OWL extension to the Protégé Java-based software.

According to an example, at any emitted tuple by a task (at a node), the procedure to determine the destination task instance (node) is modified so that the output is delivered to a Semantic Aggregator (SA). The SA takes as input the original key/value tuple of the input data for a topology, and selects a predefined value on which the semantic grouping is to be operated. The original tuple is transformed into a new tuple in which the original key is either modified, replaced, or augmented with the matching semantic concept. To simplify and accelerate the semantic matching, the semantic aggregator can query a pre-materialized OWL model through a reasoner (a logical rule engine) and can reply with the matched concept.

As an example, the open-source Java-based Pellet and C++ FACT software can be used for matching purposes based on an OWL definition. Note that, as mentioned above, the easiest type of semantic matching, namely ontology-based categorization, can be realized in a very fast way by means of a hash map. In order to deal with efficient matching of terms used within keys against ontology definitions, it is possible to build an in-memory index of synonyms that is queried when matching individual key values, in order to find out which concepts are actually being associated to tuples. The specific index/dictionary to look up may be statically fixed at grouping specification time, and/or dynamically be changed by the component implementations. For example, in a text processing component, while processing text, a component execute() method can call a further API method to set what dynamically-changing semantic context is to be used.

Integration into an existing framework can be done by modifying the grouping operation, such as by adding specific methods to component interfaces to allow matching rules to be selected and set, such as for specifying which set of ontologic concepts should be used for a grouping for example.

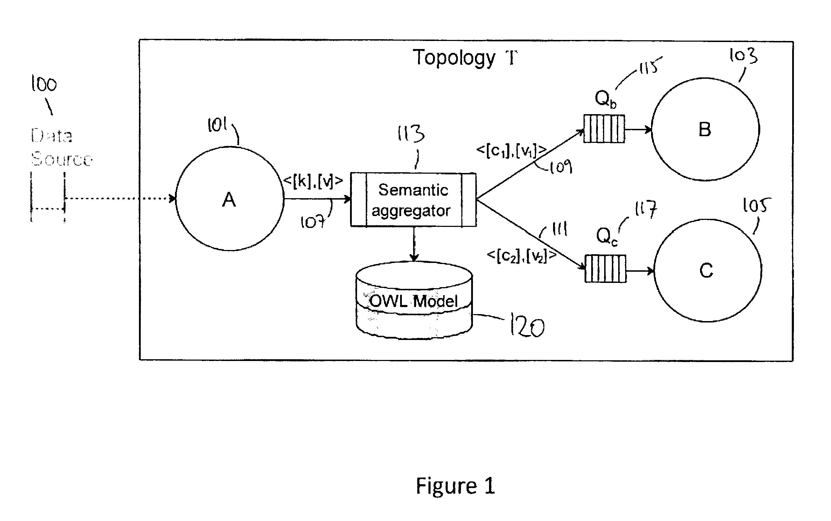

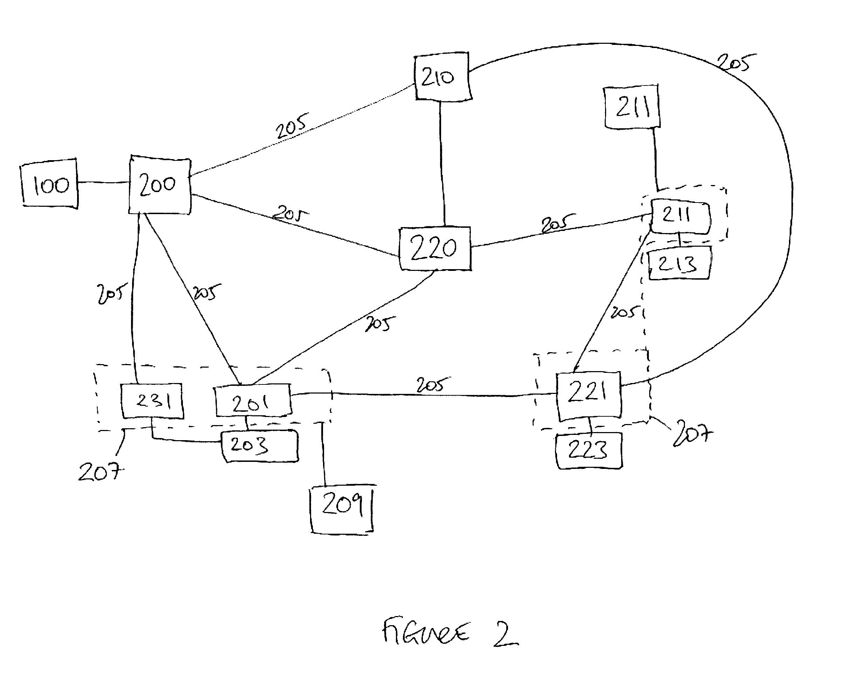

Figure 1 is a schematic representation of a portion of a processing platform according to an example. A computational topology T comprises multiple processing nodes 101, 103, 105 comprising processing logic linked using pathways, interconnects or connections 107, 109, 111 between nodes thereby to define multiple computational alternatives for the topology. For example, data passed from node 101 to103 via connection 109 can be processed resulting in a different outcome compared to the situation in which data is processed from node 101 to 105 via 111 for example. A semantic aggregator 113 is provided at the output of node 101 in the example shown in figure 1. Three nodes are shown for the sake of clarity, although it will be appreciated that more or less nodes may be present. Nodes can be physically distinct (from one another), such as separate hardware devices that can also be geographically dispersed and linked using a network such as the internet for example. Alternatively, or in combination, nodes can be virtual machines instantiated on physical hardware for example. Figure 2 is a schematic representation of a combination of physical nodes 200, 210, 220 and multiple virtual nodes 201, 211, 221 instantiated over physical hardware 203, 213, 223 and linked using connections 205. Multiple geographically dispersed instances of virtual nodes can be provided as depicted. Alternatively, or in combination clusters 207 of virtual nodes can be provided.

Sematic aggregator 113 receives, as input, data output from node 101 that has been received from a data source 100. Data source 100 can be a data stream from an application, such as a social networking application for example. In an example, input data for semantic aggregator 113, irrespective of its form when received by node 101 from data source 100, is in the form a key/value data structure <[k], [v]>. For a topology T, a single aggregator 113 can be provided that can receive data output from any one of the multiple processing nodes. Alternatively, multiple such aggregators can be provided. For example, clusters of nodes 207 can be linked to one or more aggregators 209, 211.

Input data 115 is processed by semantic aggregator 113 to determine a semantic concept associated with at least a portion of the input data. A semantic concept can be a meaning attached to a particular word or phrase for example.

In an example, a portion of the input data can include key, k of a key/value tuple of the input data. Sematic aggregator 113 selects a predefined value representing a semantic concept for the input data, and the original tuple is modified into a new tuple in which the original key is either modified, replaced, or augmented with the matching semantic concept determined by the sematic aggregator 113. With reference to figure 1, exemplary data stream <[k], [v]> is processed by aggregator 113 and modified tuples <[c1], [v1]>, <[c2], [v2]> are output representing semantic concept/value tuples. Predefined values representing the concept can be determined using a pre-populated database 120 as described above for example.

In an example, modified tuples are routed between nodes using ontology-based matching rules that relate the pathways between nodes of the topology. Accordingly, a modified tuple can be routed to a destination node in the topology. The destination node can be selected on the basis of the or each rule and the semantic concept. That is, a modified tuple is routed to a destination node on the basis of the semantic concept derived from the original content of the data input to the sematic aggregator 113. More specifically, ontology-based matching rules are used to route the data based on the semantic concept so that a destination node for the data is selected based on an ontologic category or concept associated with a destination node, subject to a disambiguation mechanism as noted above, if appropriate.

Input queues Qb (115) and Qc (117) for nodes 103 and 105, respectively, can be provided. That is, the aggregator(s) send messages to nodes 103, 105 which can queue incoming requests in their respective input queues, such as if they are busy processing a previous message for example.

In a load balancing scenario, to avoid overloading specific instances of nodes, data can be distributed to destination nodes at a predefined rate. For example, data can be routed alternately between appropriate nodes to avoid anyone specific node becoming inundated with data. As such, a matching rule can include provision to throttle the transmission of data to nodes taking into account the volume of data that has been sent according to some metric, such as amount of data sent in specified period of time, or the number of instances of data sent in specific period of time irrespective of data size for example.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method for processing data in a distributed processing platform, comprising:
receiving input data from a source node in a computational topology of the platform including multiple nodes comprising processing logic linked using pathways between nodes thereby to define multiple computational alternatives for the topology;
processing the input data to determine a semantic concept associated with at least a portion of the input data;
routing the input data using one or more ontology-based matching rules relating pathways between nodes of the topology to a destination node selected on the basis of the or each rule and the semantic concept.

2. A method as claimed in claim 1, wherein the input data is routed to multiple destination nodes.

3. A method as claimed in claim 1 or 2, further including, instantiating an additional node in the topology relating to a specific computational task .

4. A method as claimed in any preceding claim, further comprising modifying the input data using the semantic concept.

5. A method as claimed in claim 4, wherein the input data is modified by adapting, replacing or augmenting the input data using data representing the determined semantic concept.

6. A method as claimed in any preceding claim, further comprising load balancing in the platform by distributing input data according to the one or more ontology-based matching rules to multiple destination nodes at a predefined rate.

7. A method as claimed in any preceding claim, wherein the input data is a tuple including a key and an associated value, and wherein the semantic concept is determined using the key.

8. A distributed processing framework, comprising:
multiple nodes including processing logic;
multiple interconnects linking the nodes to form a computational topology; and
a semantic aggregator to process data from respective ones of the multiple nodes and
determine a semantic concept associated with at least a portion of the data; the framework operable to:
route the data using one or more ontology-based matching rules relating to the interconnects between nodes to a destination node selected on the basis of the or each rule and the semantic concept.

9. A distributed processing framework as claimed in claim 8, the framework further operable to modify the data using the semantic concept, and to route the data to multiple destination nodes.

10. A distributed processing framework as claimed in claim 8 or 9, the framework operable to
load balance the distribution of data by routing the data to the multiple destination nodes at a predefined rate thereby to avoid overloading a specific node of the framework.

11. A semantic aggregator to process data to be routed in a distributed processing platform comprising multiple nodes comprising processing logic linked using pathways between nodes thereby to define multiple computational alternatives for the topology in order to determine a semantic concept associated with at least a portion of the data.

12. A semantic aggregator as claimed in claim 11, further operable to provide the semantic concept for the framework thereby to enable routing of the data using one or more ontology-based matching rules relating pathways between nodes of the topology to a destination node selected on the basis of the or each rule and the semantic concept.

13. A semantic aggregator as claimed in claim 11 or 12, further operable to receive, as the data, a tuple in the form a key/value pair, and to process the key to determine the semantic concept.

14. A processing node of a distributed processing framework, comprising:
processing logic;
respective connections to multiple other nodes of the framework and a semantic aggregator; the node operable to:
receive input data;
output data to the semantic aggregator;
receive modified data from the semantic aggregator; and
transmit the modified data to at least one of the multiple nodes using one or more ontology-based matching rules relating the connections between the node and the multiple other nodes on the basis of the or each rule and a semantic concept used to generate the modified data.

15. A computer program product, comprising a computer usable medium having computer readable program code embodied therein, said computer readable program code adapted to be executed to implement a method as claimed in any of claims 1 to 7.

## Amended claims

### Amended claims in accordance with Rule 137(2) EPC.

1. A computer-implemented method for processing data in a distributed processing platform, comprising:
receiving input data including data representing an input key of a key/value tuple of the input data from a source node (100) in a computational topology of the platform including multiple nodes (103, 105, 200, 210, 220, 201, 211, 221) comprising processing logic linked using pathways (107, 109, 111, 205) between nodes thereby to define multiple computational alternatives for the topology;
processing the input data to determine a semantic concept associated with the input key;
modifying the input key to form a modified tuple of the input data including an output key representing the semantic concept selected from a database (120) of ontological categories; and
routing the input data using one or more ontology-based matching rules relating pathways between nodes of the topology to a destination node selected on the basis of the or each rule and the output key representing the semantic concept.

2. A method as claimed in claim 1, wherein the input data is routed to multiple destination nodes.

3. A method as claimed in claim 1 or 2, further including, instantiating an additional node in the topology relating to a specific computational task.

4. A method as claimed in claim 1, wherein the input data is modified by adapting, replacing or augmenting the input data using data representing the determined semantic concept.

5. A method as claimed in any preceding claim, further comprising load balancing in the platform by distributing input data according to the one or more ontology-based matching rules to multiple destination nodes at a predefined rate.

6. A method as claimed in any preceding claim, wherein the input data is a tuple including a key and an associated value, and wherein the semantic concept is determined using the key.

7. A distributed processing framework, comprising:
multiple nodes (103, 105, 200, 210, 220, 201, 211, 221) including processing logic;
multiple interconnects (107, 109, 111, 205) linking the nodes to form a computational topology; and
a semantic aggregator (113, 209, 211) to process input data including data representing an input key of a key/value tuple of the input data from respective ones of the multiple nodes, determine a semantic concept using the input key, and modify the input key to form a modified tuple of the input data including an output key representing the semantic concept selected from a database of ontological categories; wherein the framework is operable to:
route the data using one or more ontology-based matching rules relating to the interconnects between nodes to a destination node selected on the basis of the or each rule and the output key representing the semantic concept.

8. A distributed processing framework as claimed in claim 7, the framework operable to load balance the distribution of data by routing the data to the multiple destination nodes at a predefined rate thereby to avoid overloading a specific node of the framework.

9. A semantic aggregator (113, 209, 211) to process data to be routed in a distributed processing platform comprising multiple nodes (103, 105, 200, 210, 220, 201, 211, 221) comprising processing logic linked using pathways (107, 109, 111, 205) between nodes thereby to define multiple computational alternatives for the topology in order to determine a semantic concept associated with at least a portion of the data.

10. A semantic aggregator as claimed in claim 9, further operable to provide the semantic concept for the framework thereby to enable routing of the data using one or more ontology-based matching rules relating pathways between nodes of the topology to a destination node selected on the basis of the or each rule and the semantic concept.

11. A semantic aggregator as claimed in claim 9 or 10, further operable to receive, as the data, a tuple in the form a key/value pair, and to process the key to determine the semantic concept.

12. A processing node (103, 105, 200, 210, 220, 201, 211, 221)of a distributed processing framework, comprising:
processing logic;
respective connections (107, 109, 111, 205) to multiple other nodes of the framework and a semantic aggregator(113, 209, 211); the node operable to:
receive input data including data representing an input key of a key/value tuple of the input data;
output data to the semantic aggregator (113, 209, 211);
receive modified data from the semantic aggregator (113, 209, 211) in which the input key is modified to form a modified tuple of the input data including an output key representing the semantic concept selected from a database of ontological categories; and
transmit the modified data to at least one of the multiple nodes using one or more ontology-based matching rules relating the connections between the node and the multiple other nodes on the basis of the or each rule and the output key representing the semantic concept.

13. A computer program product, comprising a computer usable medium having computer readable program code embodied therein, said computer readable program code adapted to be executed to implement a method as claimed in any of claims 1 to 6.
